# EUROPEAN PATENT APPLICATION

(11) **EP 3 606 081 A1**
(43) Date of publication of application: **05.02.2020**
(21) Application number: 18790053.5
(22) Date of filing: 29.01.2018
(51) Int. Cl.: H04N 21/431, H04N 21/488, H04N 21/472, H04N 21/475

(54) **ON-SCREEN COMMENT DISPLAY METHOD AND ELECTRONIC DEVICE**

(30) Priority: 28.04.2017 CN 201710297516
(71) Applicant: Huawei Technologies Co., Ltd., Longgang District Shenzhen, Guangdong 518129 (CN)
(72) Inventor: LI, Rui, Shenzhen Guangdong 518129 (CN); ZHOU, Ze, Shenzhen Guangdong 518129 (CN); HUANG, Xueyan, Shenzhen Guangdong 518129 (CN); FU, Jiali, Shenzhen Guangdong 518129 (CN)
(74) Representative: Maiwald Patent- und Rechtsanwaltsgesellschaft mbH
(86) International application number: PCT/CN2018/074483
(87) International publication number: WO 2018/196457

(57) **Abstract**

Embodiments of this application provide a bullet screen display method and an electronic device, and relate to the field of multimedia technologies, to resolve a prior-art problem that bullet screen content causes interference to a user, thereby improving user experience. The method includes: determining an object display area based on a target display object in a display image, where the target display object is located in the object display area; determining a bullet screen display area based on the object display area, where the bullet screen display area and the object display area have no intersection; and displaying bullet screen content in the bullet screen display area.

## Description

This application claims priority to Chinese Patent Application No. 201710297516.0, filed with the Chinese Patent Office on April 28, 2017 and entitled "BULLET SCREEN DISPLAY METHOD AND ELECTRONIC DEVICE", which is incorporated herein by reference in its entirety.

### TECHNICAL FIELD

This application relates to the field of multimedia technologies, and in particular, to a bullet screen display method and an electronic device.

### BACKGROUND

In a video play process, a large quantity of comments simultaneously displayed in a subtitle form are referred to as bullet screens. All the bullet screens are usually displayed at an upper part or a lower part of a screen. For example, the bullet screens may move from an upper side of the screen at a fixed speed based on a timeline, or disappear after being displayed at the lower part of the screen for a period of time. However, when being displayed at the upper part or the lower part of the screen, the bullet screens usually block a part of a video image in the video play process. When there are many relatively dense bullet screens, the bullet screens usually block a large part of the video image. Therefore, interference is caused to a user in watching a video. In addition, a large quantity of dense bullet screens are not easily read, thereby reducing user experience.

### SUMMARY

Embodiments of this application provide a bullet screen display method and an electronic device, to resolve a prior-art problem that bullet screen content causes interference to a user, thereby improving user experience.

To achieve the foregoing objectives, the following technical solutions are used in the embodiments of this application.

According to a first aspect, a bullet screen display method is provided. The method includes: determining an object display area based on a target display object in a display image, where the target display object is located in the object display area; determining a bullet screen display area based on the object display area, where the bullet screen display area and the object display area have no intersection; and displaying bullet screen content in the bullet screen display area. The bullet screen display area and the object display area that are determined in the foregoing technical solution have no intersection, so that the bullet screen content displayed in the bullet screen display area does not overlap with the target display object in the display image, to avoid interference caused by the bullet screen content to a user, thereby improving user experience.

With reference to the first aspect, in a first possible implementation of the first aspect, the method further includes: if it is detected that a location of the target display object changes, determining a new bullet screen display area. In the foregoing possible implementation, when the location of the target display object moves, for example, a person in the display image moves from the middle of a screen to an edge of the screen, the bullet screen display area can be adjusted, so that the bullet screen content correspondingly moves along a movement track of the target display object, thereby ensuring that the bullet screen content displayed in the bullet screen display area does not affect presentation of the target display object in the display image.

With reference to the first aspect or the first possible implementation of the first aspect, in a second possible implementation of the first aspect, a display location of the bullet screen content is fixed; or a display location of the bullet screen content moves in the bullet screen display area in a scrolling manner; or the bullet screen content includes first bullet screen content and second bullet screen content, where a display location of the first bullet screen content is fixed, and the second bullet screen content moves in the bullet screen display area in a scrolling manner. In the foregoing possible implementation, several possible manners of displaying the bullet screen content are provided. To be specific, the bullet screen content may be displayed in a manner in which the display location is fixed and/or in a scrolling manner.

With reference to any one of the first aspect to the second possible implementation of the first aspect, in a third possible implementation of the first aspect, the determining an object display area based on a target display object in a display image includes: determining, as the object display area based on a contour of the target display object, an area obtained by extending the contour of the target display object outwards by a preset threshold; or determining, as the object display area based on a contour of the target display object, an area obtained by shrinking the contour of the target display object inwards by a preset threshold. In the foregoing possible implementation,

With reference to any one of the first aspect to the third possible implementation of the first aspect, in a fourth possible implementation of the first aspect, before the determining an object display area based on a target display object in a display image, the method further includes: recognizing at least one display object included in the display image; and determining the target display object in the at least one display object based on a display parameter of the at least one display object, where the display parameter includes a display location or a display size. In the foregoing possible implementation, the target display object is selected from the at least one recognized display object based on the display parameter, to ensure that an important display object in the display image is not covered by the bullet screen content, so that when the display image and the bullet screen content are simultaneously displayed, appreciation of a user for important content in the display image is not affected, thereby avoiding interference to the user.

With reference to the fourth possible implementation of the first aspect, in a fifth possible implementation of the first aspect, the display parameter includes the display location, and the determining the target display object in the at least one display object based on a display parameter of the at least one display object includes: determining, as the target display object in the display image, a display object that is in the at least one display object and that is located in a specified area in the display image; or the display parameter includes the display size, and the determining the target display object in the at least one display object based on a display parameter of the at least one display object includes: determining, as the target display object in the display image, a display object that is in the at least one display object and whose display size is greater than or equal to a first threshold. In the foregoing possible implementation, two possible methods for determining the target display object are provided. The target display object can be quickly and effectively determined by using the foregoing method, to improve efficiency of determining the target display object from the at least one display object.

With reference to any one of the first aspect to the fifth possible implementation of the first aspect, in a sixth possible implementation of the first aspect, the method further includes: if a preset condition is met, redetermining a new bullet screen display area, and displaying the bullet screen content in the new bullet screen display area, where the preset condition includes one of the following conditions: Duration for which the bullet screen content is displayed is greater than or equal to a preset time, and the display image changes. In the foregoing possible implementation, when the duration for which the bullet screen content is displayed is greater than or equal to the preset time, or the display image changes, the new bullet screen display area is redetermined, and the bullet screen content is displayed in the new bullet screen display area. In comparison with determining of the bullet screen display area in real time, while accuracy of determining the bullet screen display area is ensured, a workload of a device can be reduced and a usage time can be extended.

According to a second aspect, an electronic device is provided. The electronic device includes: a determining unit, configured to determine an object display area based on a target display object in a display image, where the target display object is located in the object display area, where the determining unit is further configured to determine a bullet screen display area based on the object display area, where the bullet screen display area and the object display area have no intersection; and a display unit, configured to display bullet screen content in the bullet screen display area.

With reference to the second aspect, in a first possible implementation of the second aspect, the determining unit is further configured to: if it is detected that a location of the target display object changes, determine a new bullet screen display area.

With reference to the second aspect or the first possible implementation of the second aspect, in a second possible implementation of the second aspect, a display location of the bullet screen content is fixed; or a display location of the bullet screen content moves in the bullet screen display area in a scrolling manner; or the bullet screen content includes first bullet screen content and second bullet screen content, where a display location of the first bullet screen content is fixed, and the second bullet screen content moves in the bullet screen display area in a scrolling manner.

With reference to any one of the second aspect to the second possible implementation of the second aspect, in a third possible implementation of the second aspect, the determining unit is configured to: determine, as the object display area based on a contour of the target display object, an area obtained by extending the contour of the target display object outwards by a preset threshold; or determine, as the object display area based on a contour of the target display object, an area obtained by shrinking the contour of the target display object inwards by a preset threshold.

With reference to any one of the second aspect to the third possible implementation of the second aspect, in a fourth possible implementation of the first aspect, the electronic device further includes: a recognition unit, configured to recognize at least one display object included in the display image; and the determining unit is further configured to determine the target display object in the at least one display object based on a display parameter of the at least one display object, where the display parameter includes a display location or a display size.

With reference to the fourth possible implementation of the second aspect, in a fifth possible implementation of the second aspect, the display parameter includes the display location, and the determining unit is configured to determine, as the target display object in the display image, a display object that is in the at least one display object and that is located in a specified area in the display image; or the display parameter includes the display size, and the determining unit is configured to determine, as the target display object in the display image, a display object that is in the at least one display object and whose display size is greater than or equal to a first threshold.

With reference to any one of the second aspect to the fifth possible implementation of the second aspect, in a sixth possible implementation of the second aspect, the determining unit is further configured to: if a preset condition is met, redetermine a new bullet screen display area, and display the bullet screen content in the new bullet screen display area, where the preset condition includes one of the following conditions: Duration for which the bullet screen content is displayed is greater than or equal to a preset time, and the display image changes.

According to a third aspect, an electronic device is provided. The electronic device includes a memory, a processor, a display, a communications interface, and a bus; the memory stores code and data; the processor, the memory, the display, and the communications interface are connected by using the bus; and the processor runs the code in the memory, so that the electronic device performs the bullet screen display method according to any one of the first aspect to the sixth possible implementation of the first aspect.

According to a fourth aspect, a computer readable storage medium is provided. The computer readable storage medium stores a computer execution instruction. When at least one processor of a device executes the computer execution instruction, the device performs the bullet screen display method according to any one of the first aspect or the possible implementations of the first aspect.

According to a fifth aspect, a computer program product is provided. The computer program product includes a computer execution instruction, and the computer execution instruction is stored in a computer readable storage medium. When at least one processor of a device may read the computer execution instruction from the computer readable storage medium, the at least one processor executes the computer execution instruction, so that the device implements the bullet screen display method according to any one of the first aspect or the possible implementations of the first aspect.

It may be understood that any one of the electronic device that performs the bullet screen display method, the computer storage medium, or the computer program product provided above is configured to perform a corresponding method provided above. Therefore, for beneficial effects that can be achieved thereof, refer to the beneficial effects in the corresponding method provided above. Details are not described herein again.

### BRIEF DESCRIPTION OF DRAWINGS

FIG. 1 is a schematic structural diagram of a bullet screen display system according to an embodiment of this application;
FIG. 2 is a schematic structural diagram of a content server according to an embodiment of this application;
FIG. 3 is a schematic structural diagram of an electronic device according to an embodiment of this application;
FIG. 4 is a flowchart of a bullet screen display method according to an embodiment of this application;
FIG. 5 is a schematic diagram of an object display area according to an embodiment of this application;
FIG. 6 is a schematic diagram of another object display area according to an embodiment of this application;
FIG. 7 is a schematic diagram of still another object display area according to an embodiment of this application;
FIG. 8 is a schematic diagram of displaying 1^{st} bullet screen content according to an embodiment of this application;
FIG. 9 is a schematic diagram of displaying 2^{nd} bullet screen content according to an embodiment of this application;
FIG. 10 is a schematic diagram of displaying 3^{rd} bullet screen content according to an embodiment of this application;
FIG. 11 is a schematic diagram of displaying 4^{th} bullet screen content according to an embodiment of this application;
FIG. 12 is a flowchart of another bullet screen display method according to an embodiment of this application;
FIG. 13 is a schematic diagram of displaying 5^{th} bullet screen content according to an embodiment of this application;
FIG. 14 is a flowchart of still another bullet screen display method according to an embodiment of this application;
FIG. 15 is a schematic diagram of recognizing a display object according to an embodiment of this application;
FIG. 16 is a schematic diagram of determining an object display area according to an embodiment of this application;
FIG. 17 is a flowchart of yet another bullet screen display method according to an embodiment of this application;
FIG. 18 is a schematic diagram of displaying 6^{th} bullet screen content according to an embodiment of this application;
FIG. 19 is a schematic diagram of displaying 7^{th} bullet screen content according to an embodiment of this application;
FIG. 20 is a schematic diagram of displaying 8^{th} bullet screen content according to an embodiment of this application;
FIG. 21 is a schematic structural diagram of an electronic device according to an embodiment of this application; and
FIG. 22 is a schematic structural diagram of another electronic device according to an embodiment of this application.

### DESCRIPTION OF EMBODIMENTS

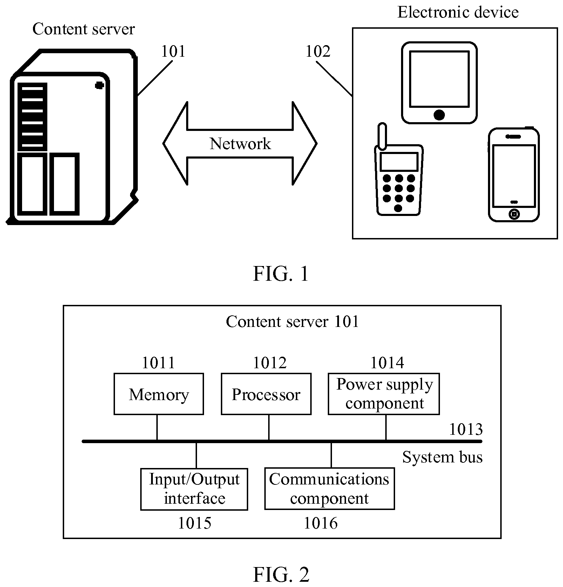

FIG. 1 is a diagram of a system architecture of a bullet screen display system according to an embodiment of this application. Referring to FIG. 1, the system includes a content server 101 and an electronic device 102. The content server 101 and the electronic device 102 may communicate with each other by using a network.

The content server 101 may be a computer having a server function or the like, and is configured to provide a network resource for the electronic device 102, for example, a multimedia resource. Referring to FIG. 2, the content server 101 includes a memory 1011, a processor 1012, a system bus 1013, a power supply component 1014, an input/output interface 1015, a communications component 1016, and the like. The memory 1011 may be configured to store data, a software program, and a module, and mainly include a program storage area and a data storage area. The program storage area can store an operating system, an application program required by at least one function, and the like. The data storage area can store data created during use of the content server 101, and the like. The processor 1012 performs various functions of the content server 101 and data processing by running or executing the software program and/or the module that are/is stored in the memory 1011 and invoking the data stored in the memory 1011. The system bus 1013 includes an address bus, a data bus, and a control bus, and is configured to transmit data and an instruction. The power supply component 1014 is configured to supply power to each component of the content server 101. The input/output interface 1015 provides an interface between the processor 1012 and a peripheral interface module. The communications component 1016 is configured to perform communication between the content server 101 and another device in a wired or wireless manner. In the system, the content server 101 undertakes key tasks, such as storage, forwarding, and release of data, and is an indispensable part in various networks based on a client/server (C/S) mode or a browser/server (B/S) mode.

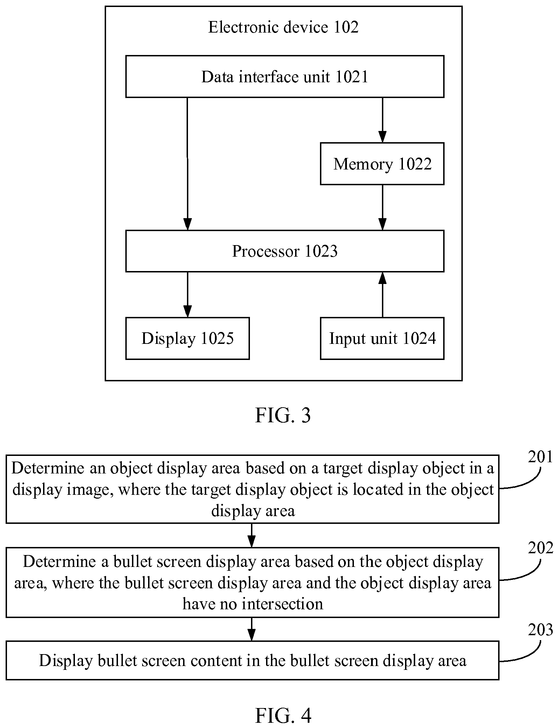

The electronic device 102 is configured to present content such as a multimedia resource to a user, and may be a mobile phone, a tablet computer, a notebook computer, a portable device, and the like. Referring to FIG. 3, the electronic device 102 may include components such as a data interface unit 1021, a memory 1022, a processor 1023, an input unit 1024, and a display 1025. The data interface unit 1021 may also be referred to as a communications interface, and is configured to: obtain data from a network, and transmit the data to the memory 1022 and the processor 1023. The memory 1022 may store a part of the data obtained by the data interface unit 1021, and provide the stored data for the processor 1023. The processor 1023 may be configured to: process data from the data interface unit 1021, the memory 1022, and the input unit 1024, and transmit the data to the display 1025. The input unit 1024 may be configured to receive data sent by an input device, and the input device may be a remote control, a keyboard, a touch panel, or the like. The display 1025 is configured to display data from the processor 1023, to present the data to a user. For example, the display 1025 may be a liquid crystal display or the like.

FIG. 4 is a flowchart of a bullet screen display method according to an embodiment of this application. The method is applied to an electronic device. Referring to FIG. 4, the method includes the following steps.

Step 201: Determine an object display area based on a target display object in a display image, where the target display object is located in the object display area.

The display image may be an image in a video play process, may be an image in MV of a song, or may be an image in web browsing. For example, the display image may be a commodity image in online shopping, an image in WeChat Moments, an image in an electronic album, a book cover image in an ebook, or the like.

In addition, the target display object may include one or more display objects, and may be a main display object in the display image. The main display object may be a part that is in the display image and that is focused clearly or highlighted in a plot, for example, a person in a scenery image. Specifically, from the perspective of a display location, the target display object is usually in front of other display objects, and may also be referred to as a foreground. From the perspective of a coverage attribute, the target display object is usually a display object that cannot be covered by bullet screen content. If the target display object is covered, an effect of transferring content of the display image is affected. The object display area is an area used to display the target display object. The object display area may be used to display all content of the target display object, or may be used to display some content of the target display object.

Specifically, the object display area may be determined based on the target display object in the display image in the following three different methods. Details are as follows:

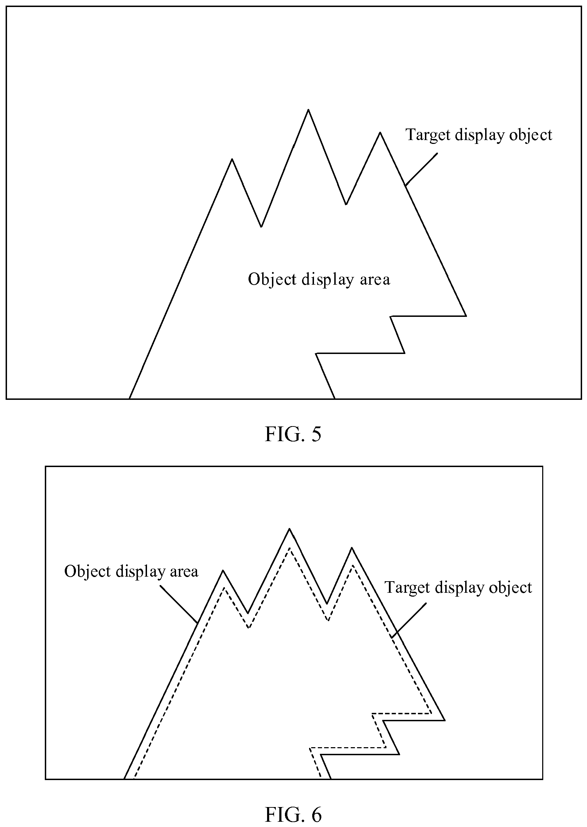

First method: As shown in FIG. 5, an area occupied by the target display object is directly determined as the object display area.

The area occupied by the target display object is directly determined as the object display area, so that all content of the target display object can be displayed in the object display area. The object display area can be simply and quickly determined by using the method.

Second method: As shown in FIG. 6, an area obtained by extending a contour of the target display object outwards by a preset threshold is determined as the object display area based on the contour of the target display object.

The area obtained by extending the contour of the target display object outwards by the preset threshold is determined as the object display area based on the contour of the target display object, so that all content of the target display object can be displayed in the object display area, and the target display object can be effectively separated from other content of the display image, to help a user effectively capture main content of the display image, thereby reducing interference caused by the other content to the user.

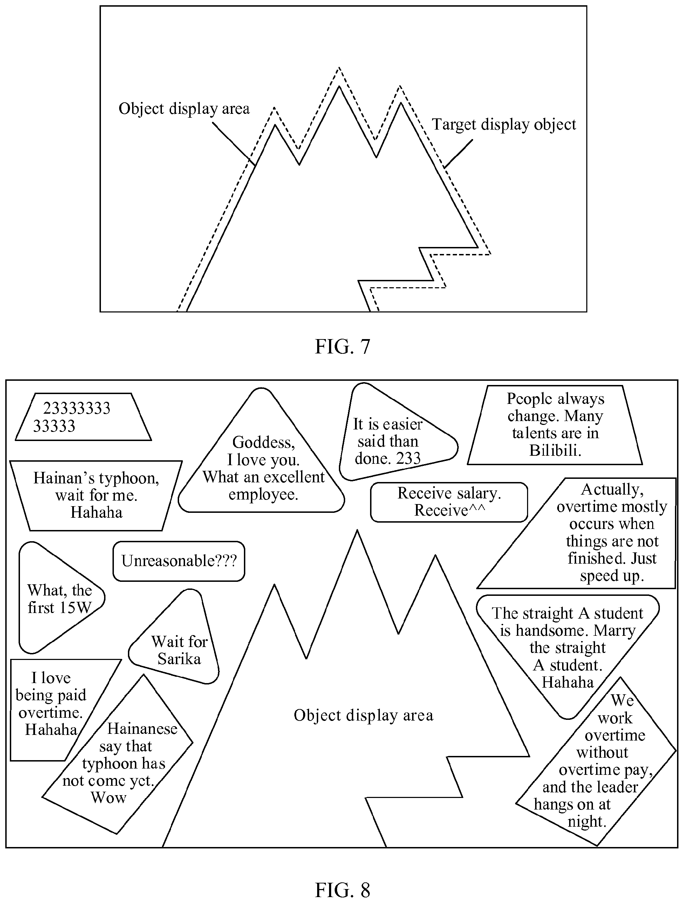

Third method: As shown in FIG. 7, an area obtained by shrinking a contour of the target display object inwards by a preset threshold is determined as the object display area based on the contour of the target display object.

When an area occupied by the target display object is relatively large, and content on an edge of the target display object is not main content of the target display object, the area obtained by shrinking the contour of the target display object inwards by the preset threshold may be determined as the object display area based on the contour of the target display object. The object display area determined by using the method may be used to display the main content of the target display object. In addition, a display area occupied by the target display object in the display image can be decreased, so that an area used to display bullet screen content can be increased.

It should be noted that the preset threshold may be preset, and the preset threshold by which the contour of the target display object is extended outwards in the second method and the preset threshold by which the contour of the target display object is shrunk inwards in the third method may be the same or different. This is not limited in this embodiment of this application.

Step 202: Determine a bullet screen display area based on the object display area, where the bullet screen display area and the object display area have no intersection.

Specifically, after the object display area is determined, an area other than the object display area in the display image may be determined as the bullet screen display area, so that the bullet screen display area and the object display area have no intersection, in other words, the bullet screen display area does not overlap with the object display area.

Optionally, the bullet screen display area may include at least one area, and each of the at least one area may be contiguous or discontiguous. Each area may be used to display one piece of bullet screen content. In addition, shapes of the areas may be the same or different, and the shapes of the areas may be regular or irregular. For example, the shape may be a regular polygon (for example, a triangle or a quadrilateral), a circle, a sector, an oval, or the like, or may be an irregular polygon, a bubble shape, a cloud shape, or the like. This is not limited in this embodiment of this application.

Step 203: Display bullet screen content in the bullet screen display area.

The bullet screen content may include one or more bullet screens, and the bullet screen content may be comments made when a plurality of users view the display image or a multimedia resource related to the display image. After the bullet screen display area is determined, the bullet screen content may be displayed in the bullet screen display area, so that the displayed bullet screen content does not overlap with the object display area in the display image, to avoid mutual interference between the bullet screen content and the target display object, thereby improving user experience. For example, bullet screen content is displayed in a bullet screen display area shown in FIG. 8. A shape of the bullet screen display area in FIG. 8 is merely an example, and does not constitute a limitation on this embodiment of this application.

Specifically, a display location of the bullet screen content in the bullet screen display area may be fixed. Alternatively, a display location of the bullet screen content moves in the bullet screen display area in a scrolling manner. Alternatively, the bullet screen content includes first bullet screen content and second bullet screen content, where a display location of the first bullet screen content is fixed, and the second bullet screen content moves in the bullet screen display area in a scrolling manner.

When the bullet screen content is displayed in the scrolling manner, it means that the bullet screen content may appear from one end of the bullet screen display area, moves along a horizontal direction at a constant speed at consecutive moments, and is displayed until the bullet screen content disappears at the other end of the bullet screen display area. The movement direction may be moving from a right end to a left end, or moving from a left end to a right end.

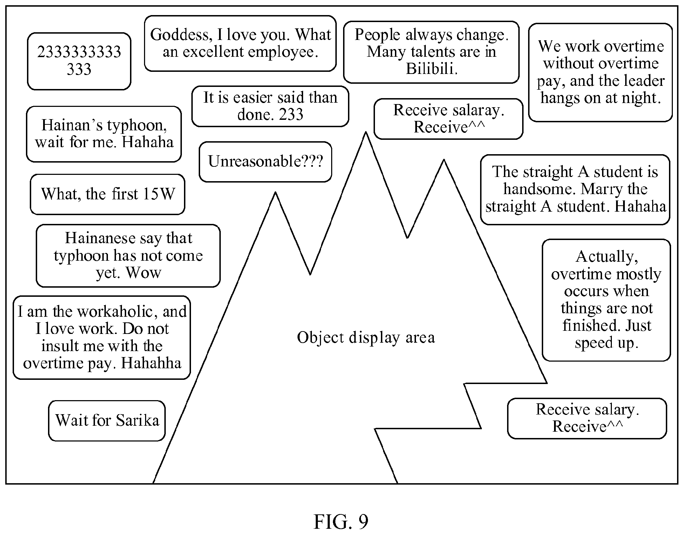

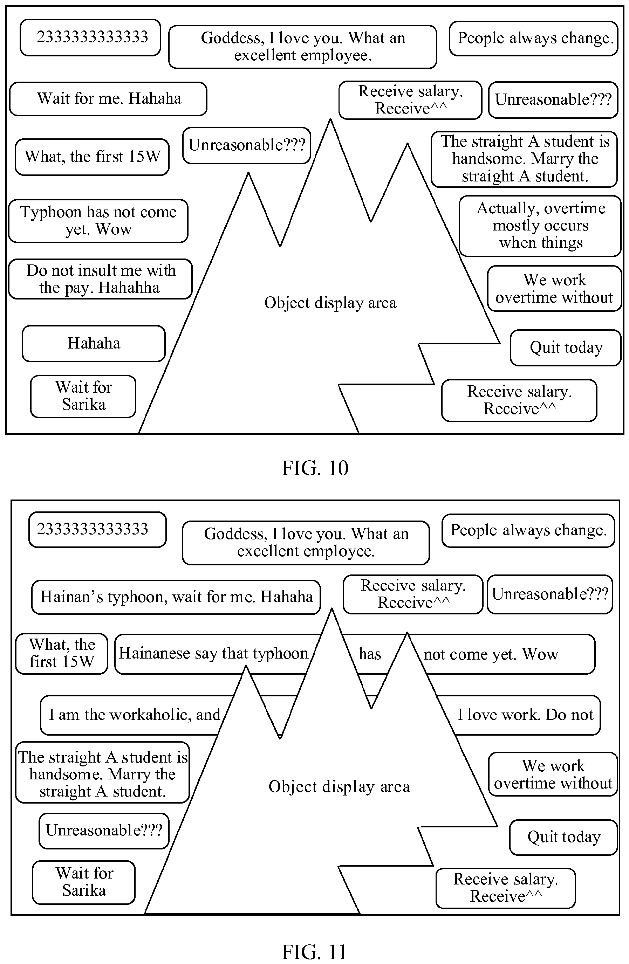

For example, the bullet screen display area includes a plurality of rectangular areas, and one piece of bullet screen content is displayed in one rectangular area. As shown in FIG. 9, when a display location of bullet screen content is fixed, the bullet screen content does not scroll in a rectangular area. If a length of the bullet screen content exceeds a length of the rectangular area, the bullet screen content may be displayed in a new line. As shown in FIG. 10, when bullet screen content is displayed in a scrolling manner, the bullet screen content may move along a horizontal direction in a rectangular area, and may be displayed in a single line.

In addition, the bullet screen display area may be contiguous or discontiguous. When the bullet screen display area is discontiguous, one piece of bullet screen content may be displayed in the discontiguous area. As shown in FIG. 11, when a bullet screen display area is separated by an object display area, a single piece of bullet screen content may be separated for display. To be specific, when the bullet screen content moves to an edge of the object display area, the bullet screen content stops being displayed. A stop location of the object display area in a horizontal direction is determined, and the separated bullet screen content continues to be displayed at the stop location.

In this embodiment of this application, the bullet screen display area may be displayed in the display image, or may not be displayed in the display image. In addition, wonderful bullet screen content in a plurality of bullet screens may be further recognized by using different bullet screen display times, a shape of a bullet screen display area, a bullet screen display manner, and the like. For example, a display time of the wonderful bullet screen content may be prolonged, or the wonderful bullet screen content may be displayed in a bullet screen display area in a special shape, such as a bubble shape or a cloud shape, or the wonderful bullet screen content may be displayed in a scrolling manner, and common bullet screen content may be displayed in a fixed location, to improve recognizability of a wonderful bullet screen, thereby improving user experience.

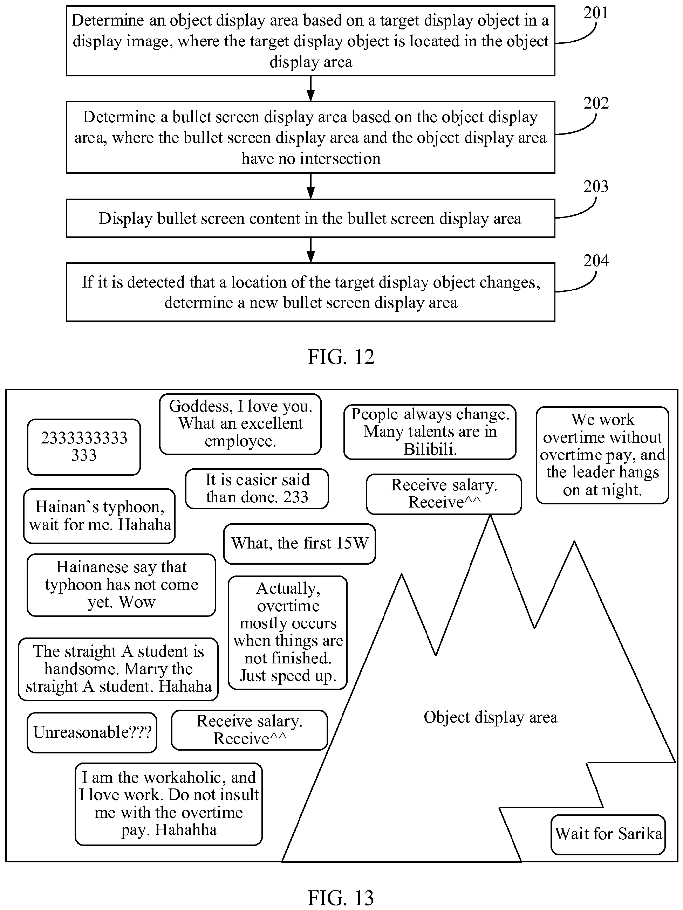

Further, referring to FIG. 12, after step 203, the method further includes step 204.

Step 204: If it is detected that a location of the target display object changes, determine a new bullet screen display area.

Usually, in a video play process, when the location of the display object moves, for example, a person in the display image moves from the middle of a screen to an edge of the screen, the bullet screen display area can be adjusted, so that the bullet screen content correspondingly moves along a movement track of the target display object, thereby ensuring that when the location of the target display object changes, the bullet screen content displayed in the bullet screen display area does not affect presentation of the target display object in the display image.

Specifically, the location of the target display object in the display image may be detected. If it is detected that the location of the target display object changes, a location of the object display area may be correspondingly adjusted, and the new bullet screen display area is determined and is used to display the bullet screen content. Optionally, the location of the target display object may be detected based on a fixed time interval. If a change value of the location of the target display object reaches a preset location threshold, the new bullet screen display area is determined. Correspondingly, the bullet screen content displayed in the bullet screen display area may also be adjusted to some extent, so that the bullet screen content adapts to a change of the bullet screen display area.

For example, when a location of an object display area shown in FIG. 8 moves from the middle to a right edge, a location of the determined new bullet screen display area may be shown in FIG. 13, and the bullet screen content displayed in the bullet screen display area is also correspondingly adjusted. The location of the new bullet screen display area determined in FIG. 13 and the adjustment to the bullet screen content are merely examples, and do not constitute a limitation on this embodiment of this application.

The bullet screen display method provided in step 201 to step 203 may be performed in real time, or may be performed based on a preset period. When a bullet screen is displayed in real time by using the foregoing method, the new bullet screen display area is determined without performing step 204. When a bullet screen is displayed based on the preset period by using the foregoing method, the new bullet screen display area may be determined based on a change of the location of the target display object in step 204.

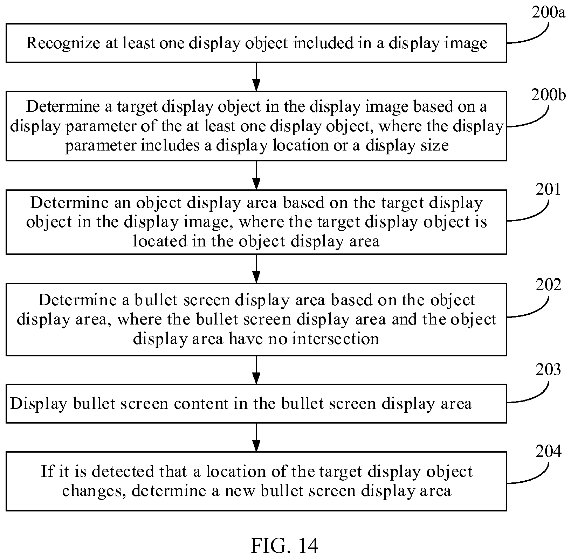

Further, referring to FIG. 14, before step 201, the method further includes step 200a and step 200b.

Step 200a: Recognize at least one display object included in the display image.

The at least one display object may include one or more display objects, and the display object may be a person, an animal, another object, or the like. For example, the display image may include one or more persons, or may include one or more other objects, or the like.

Specifically, when the at least one display object included in the display image is recognized, the display image may be segmented into super pixel blocks with a similar local color and a similar texture similarity by using a foreground and background image segmentation technology. Each super pixel block may include three classified zones: A classified zone is completely a foreground, a classified zone is completely a background, and a classified zone includes a part of the foreground and a part of the background. Then, the foreground and the background are classified and recognized based on the super pixel block, to determine that each super overspeed block is the foreground or the background. For example, the super pixel block may be classified and recognized by using a classifier obtained through foreground and background training. Finally, a spatial-temporal CRF module is established with reference to spatial-temporal local information of the display image, and accurate pixel-level segmentation of the foreground and the background that are of the display image is implemented through Graph Cut optimization resolution, to obtain at least one display object that is finally obtained through segmentation.

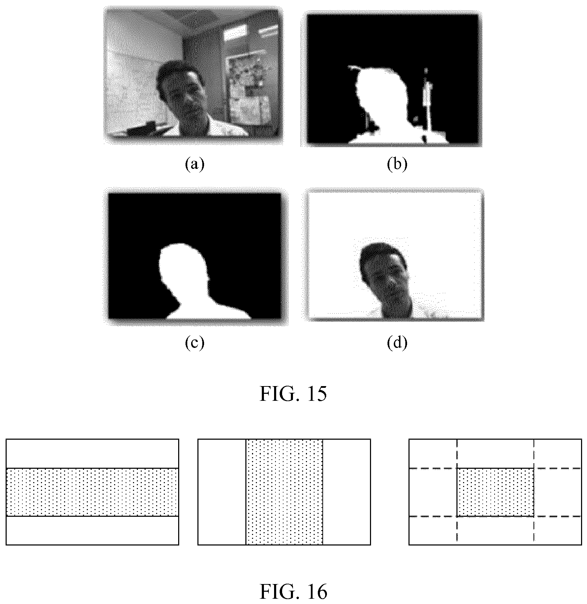

For example, FIG. 15(b) shows a result obtained after a display image shown in FIG. 15(a) is segmented and is recognized by a classifier, then FIG. 15(c) shows a result obtained after CRF optimization is performed on the display image, and FIG. 15(d) shows at least one display object obtained after the display image is accurately segmented based on an area shown in FIG. 15(c).

It should be noted that the recognizer that classifies and recognizes the foreground and the background may be updated in a timely manner based on the result obtained after the segmentation, so that the recognizer adapts to changes of the foreground and the background. In addition, for the foregoing specific method for recognizing the at least one display object included in the display image, refer to the related technology. Details are not described in this embodiment of this application.

Step 200b: Determine the target display object in the display image based on a display parameter of the at least one display object, where the display parameter includes a display location or a display size.

The target display object is one or more of the at least one display object. In this embodiment of this application, the target display object may be selected from the at least one display object based on a display parameter of each of the at least one display object. The display parameter may be a display location, a display size, or the like. A display location of a display object is a location of the display object in a display image, and a display size of a display object may be a size of an area occupied by the display object in a display image. The target display object can be quickly and effectively determined by using the display location or the display size of each display object, to improve efficiency of determining the target display object from the at least one display object, and ensure that an important display object in the display image is not covered by bullet screen content, so that appreciation of a user for important content in the display image is not affected.

Specifically, if the display parameter includes the display location, a display object that is in the at least one display object and that is located in a specified area in the display image may be determined as the target display object in the display image. As shown in FIG. 16, a main display object is usually located in a middle area in a display image. Therefore, the specified area may be a horizontal or vertical middle area in the display image. A length and a width that are of the specified area may be preset (for example, the length of the specified area may be 1/3 of a length of the display image, and the width of the specified area is 1/3 of a width of the display image). Alternatively, the specified area is set by a user. The user may determine the specified area by using input devices such as a touch panel, a mouse, a keyboard, a remote control, or an air mouse focus. For example, the user may determine a boundary line, a boundary point, or the like of the specified area by using these input devices, to set the specified area.

Alternatively, if the display parameter includes the display size, a display object that is in the at least one display object and whose display size is greater than or equal to a first threshold is determined as the target display object in the display image. A display size corresponding to a main display object is usually relatively large. Therefore, a display size of each display object is compared with the preset first threshold, to select, from the at least one display object as the target display object, the display object whose display size is greater than or equal to the first threshold. The first threshold may be set to a fixed value, for example, a pixel size is 400 x 300. Alternatively, the first threshold may be determined based on a size of the display image. For example, the first threshold may be 1/3 of a length of the display image and 1/3 of a width of the display image. Alternatively, the first threshold is set by a user or the like. This is not limited in this embodiment of this application.

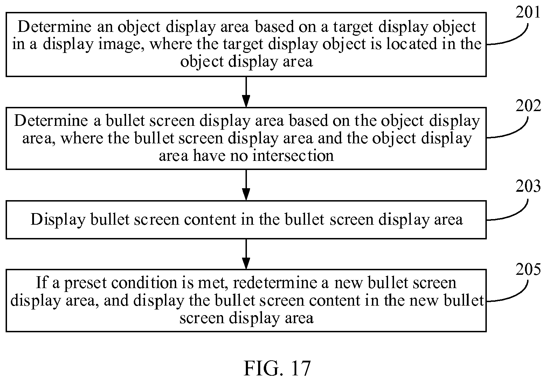

Further, referring to FIG. 17, the method further includes step 205. There is no sequence between step 205 and step 201 to step 203. An example in which step 205 is performed after step 203 is used in FIG. 17 for description.

Step 205: If a preset condition is met, redetermine a new bullet screen display area, and display the bullet screen content in the new bullet screen display area. The preset condition may include one of the following conditions: Duration for which the bullet screen content is displayed is greater than or equal to a preset time, and the display image changes.

Specifically, in a play and display process of a video or another display image, the bullet screen display area may be redetermined when the duration for which the bullet screen content is displayed is greater than or equal to the preset time or the display image changes, and the bullet screen content is displayed in the determined new bullet screen display area. The preset time may be preset, or may be set by a user in a play and display process of the display image. This is not limited in this embodiment of this application.

For example, in a video play process, the preset condition may be that the duration for which the bullet screen content is displayed is greater than or equal to the preset time, so that the bullet screen display area can be redetermined once at an interval of the preset time, and the bullet screen content is correspondingly displayed in the redetermined bullet screen display area. Therefore, the bullet screen display area changes with a display image in a video, to avoid interference between the bullet screen content and the target display object in the display image.

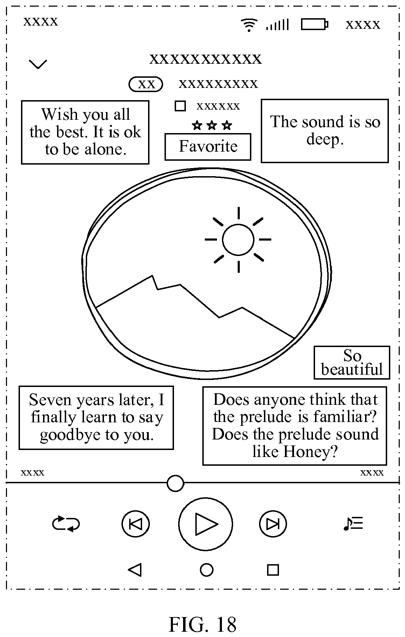

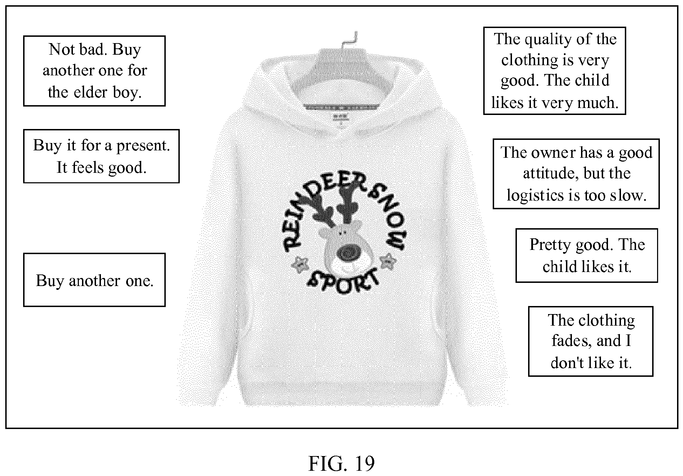

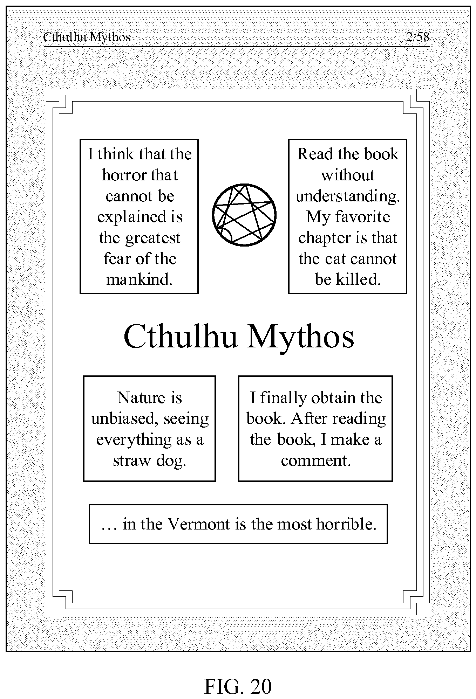

For another example, in a process in which a user plays a song, shops online, reads a book, or browses (for example, browses) internet information, such as news, WeChat Moments, or an electronic album, the preset condition may be that the display image changes. Specifically, as shown in FIG. 18, when a user plays a song, if a current song ends and switches to a next song, a display image corresponding to a corresponding song changes, and bullet screen content is displayed by redetermining a new bullet screen display area, so that the user can browse a comment or an opinion of another user on the played song. As shown in FIG. 19, when a user shops online, if the user selects details of different commodities, models, styles, or different parts for viewing, an image corresponding to a user operation is displayed, and bullet screen content is displayed by redetermining a new bullet screen display area, so that the user can view a commodity comment made by another user, to help the user make a selection. As shown in FIG. 20, when a user reads a book and switches between different books, and a display image of a book cover changes, corresponding bullet screen content may be displayed by redetermining a new bullet screen display area, so that the user views a comment of another user on a current display image, thereby improving user experience.

In this embodiment of this application, the object display area used to display the target display object is determined based on the target display object in the display image, and then the bullet screen display area is determined based on the object display area, where the bullet screen display area and the object display area have no intersection, so that the bullet screen content displayed in the bullet screen display area does not overlap with the target display object in the display image, to avoid interference caused by the bullet screen content to the user, thereby improving user experience.

The foregoing mainly describes, from the perspective of the device, the solutions provided in the embodiments of this application. It may be understood that to implement the foregoing functions, the device, such as an electronic device, includes a corresponding hardware structure and/or software module for performing each function. A person skilled in the art should be easily aware that devices, algorithms, and steps in the examples described with reference to the embodiments disclosed in this specification can be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the electronic device may be divided into function modules based on the foregoing method examples. For example, each function module may be obtained through calculation based on each corresponding function, or two or more functions may be integrated into one processing module. The integrated module may be implemented in a form of hardware, or may be implemented in a form of a software function module. It should be noted that in the embodiments of this application, the module division is an example, and is merely logical function division. There may be another division manner in actual implementation.

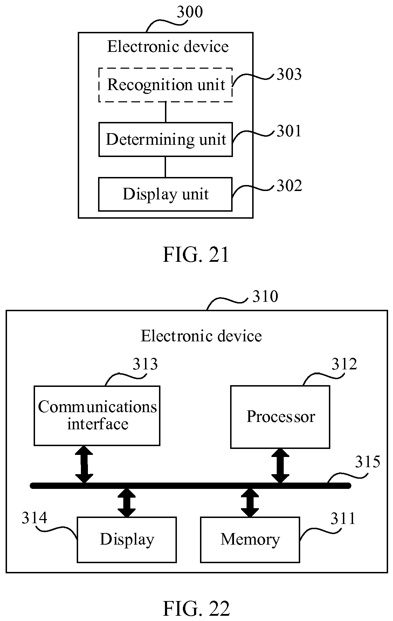

When each function module is obtained through calculation based on each corresponding function, FIG. 21 is a possible schematic structural diagram of the electronic device in the foregoing embodiment. An electronic device 300 includes a determining unit 301 and a display unit 302. The determining unit 301 is configured to perform step 201 and step 202 in FIG. 4, step 201, step 202, and step 204 in FIG. 12, step 200b, step 202, and step 204 in FIG. 14, and step 201, step 202, and step 205 in FIG. 17. The display unit 302 is configured to perform step 203 in FIG. 4, FIG. 12, FIG. 14, and FIG. 17. Further, the electronic device 300 may further include a recognition unit 303. The recognition unit 303 is configured to perform step 200a in FIG. 14. All related content of the steps in the foregoing method embodiments may be cited in function descriptions of the corresponding function modules. Details are not described herein again.

In hardware implementation, the determining unit 301 and the recognition unit 303 may be processors, and the display unit 302 may be a display.

FIG. 22 is a possible schematic diagram of a logical structure of an electronic device 310 in the foregoing embodiment according to an embodiment of this application. The electronic device 310 includes a memory 311, a processor 312, a communications interface 313, a display 314, and a bus 315. The memory 311, the processor 312, the communications interface 313, and the display 314 are connected to each other by using the bus 315. In this embodiment of this application, the processor 312 is configured to control and manage an action of the electronic device 310. For example, the processor 312 is configured to perform step 201 and step 202 in FIG. 4, step 201, step 202, and step 204 in FIG. 12, step 200a, step 202, and step 204 in FIG. 14, and step 201, step 202, and step 205 in FIG. 17, and/or configured to perform another process in the technology described in this specification. The communications interface 313 is configured to support the electronic device 310 in performing communication. The memory 311 is configured to store program code and data that are of the electronic device 310. The display 314 is configured to support the electronic device in implementing a display function.

The processor 312 may be a central processing unit, a general-purpose processor, a digital signal processor, an application-specific integrated circuit, a field programmable gate array or another programmable logical device, a transistor logical device, a hardware component, or any combination thereof. The processor 312 may implement or execute various example logical blocks, modules, and circuits described with reference to content disclosed in this application. The processor may alternatively be a combination that implements a computing function, for example, a combination of one or more microprocessors or a combination of a digital signal processor and a microprocessor. The bus 315 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus 315 in FIG. 22, but this does not mean that there is only one bus or only one type of bus.

In another embodiment of this application, a computer readable storage medium is further provided. The computer readable storage medium stores a computer execution instruction. When at least one processor of a device executes the computer execution instruction, the device performs the bullet screen display method provided in FIG. 4, FIG. 12, FIG. 14, or FIG. 17.

In another embodiment of this application, a computer program product is further provided. The computer program product includes a computer execution instruction, and the computer execution instruction is stored in a computer readable storage medium. When at least one processor of a device may read the computer execution instruction from the computer readable storage medium, the at least one processor executes the computer execution instruction, so that the device implements the bullet screen display method provided in FIG. 4, FIG. 12, FIG. 14, or FIG. 17.

In the embodiments of this application, the object display area used to display the target display object is determined based on the target display object in the display image, and then the bullet screen display area is determined based on the object display area, where the bullet screen display area and the object display area have no intersection, so that the bullet screen content displayed in the bullet screen display area does not overlap with the target display object in the display image, to avoid interference caused by the bullet screen content to a user, thereby improving user experience.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A bullet screen display method, wherein the method comprises:
determining an object display area based on a target display object in a display image, wherein the target display object is located in the object display area;
determining a bullet screen display area based on the object display area, wherein the bullet screen display area and the object display area have no intersection; and
displaying bullet screen content in the bullet screen display area.

2. The method according to claim 1, wherein the method further comprises:
if it is detected that a location of the target display object changes, determining a new bullet screen display area.

3. The method according to claim 1 or 2, wherein a display location of the bullet screen content is fixed; or a display location of the bullet screen content moves in the bullet screen display area in a scrolling manner; or the bullet screen content comprises first bullet screen content and second bullet screen content, wherein a display location of the first bullet screen content is fixed, and the second bullet screen content moves in the bullet screen display area in a scrolling manner.

4. The method according to any one of claims 1 to 3, wherein the determining an object display area based on a target display object in a display image comprises:
determining, as the object display area based on a contour of the target display object, an area obtained by extending the contour of the target display object outwards by a preset threshold; or
determining, as the object display area based on a contour of the target display object, an area obtained by shrinking the contour of the target display object inwards by a preset threshold.

5. The method according to any one of claims 1 to 4, wherein before the determining an object display area based on a target display object in a display image, the method further comprises:
recognizing at least one display object comprised in the display image; and
determining the target display object in the at least one display object based on a display parameter of the at least one display object, wherein the display parameter comprises a display location or a display size.

6. The method according to claim 5, wherein the display parameter comprises the display location, and the determining the target display object in the at least one display object based on a display parameter of the at least one display object comprises:
determining, as the target display object in the display image, a display object that is in the at least one display object and that is located in a specified area in the display image; or
the display parameter comprises the display size, and the determining the target display object in the at least one display object based on a display parameter of the at least one display object comprises:
determining, as the target display object in the display image, a display object that is in the at least one display object and whose display size is greater than or equal to a first threshold.

7. The method according to any one of claims 1 to 6, wherein the method further comprises:
if a preset condition is met, redetermining a new bullet screen display area, and displaying the bullet screen content in the new bullet screen display area, wherein the preset condition comprises that the display image changes.

8. An electronic device, wherein the electronic device comprises:
a determining unit, configured to determine an object display area based on a target display object in a display image, wherein the target display object is located in the object display area, wherein
the determining unit is further configured to determine a bullet screen display area based on the object display area, wherein the bullet screen display area and the object display area have no intersection; and
a display unit, configured to display bullet screen content in the bullet screen display area.

9. The electronic device according to claim 8, wherein the determining unit is further configured to:
if it is detected that a location of the target display object changes, determine a new bullet screen display area.

10. The electronic device according to claim 8 or 9, wherein a display location of the bullet screen content is fixed; or a display location of the bullet screen content moves in the bullet screen display area in a scrolling manner; or the bullet screen content comprises first bullet screen content and second bullet screen content, wherein a display location of the first bullet screen content is fixed, and the second bullet screen content moves in the bullet screen display area in a scrolling manner.

11. The electronic device according to any one of claims 8 to 10, wherein the determining unit is configured to:
determine, as the object display area based on a contour of the target display object, an area obtained by extending the contour of the target display object outwards by a preset threshold; or
determine, as the object display area based on a contour of the target display object, an area obtained by shrinking the contour of the target display object inwards by a preset threshold.

12. The electronic device according to any one of claims 8 to 11, wherein
the electronic device further comprises a recognition unit, configured to recognize at least one display object comprised in the display image; and
the determining unit is further configured to determine the target display object in the at least one display object based on a display parameter of the at least one display object, wherein the display parameter comprises a display location or a display size.

13. The electronic device according to claim 12, wherein the display parameter comprises the display location, and the determining unit is configured to:
determine, as the target display object in the display image, a display object that is in the at least one display object and that is located in a specified area in the display image; or
the display parameter comprises the display size, and the determining unit is configured to:
determine, as the target display object in the display image, a display object that is in the at least one display object and whose display size is greater than or equal to a first threshold.

14. The electronic device according to any one of claims 8 to 13, wherein the determining unit is further configured to:
if a preset condition is met, redetermine a new bullet screen display area, and display the bullet screen content in the new bullet screen display area, wherein the preset condition comprises that the display image changes.

15. An electronic device, wherein the electronic device comprises a memory, a processor, a display, a bus, and a communications interface; the memory stores code and data; the processor, the memory, the display, and the communications interface are connected by using the bus; and the processor runs the code in the memory, so that the electronic device performs the bullet screen display method according to any one of claims 1 to 7.
